# EUROPEAN PATENT APPLICATION

(11) **EP 4 583 620 A1**
(43) Date of publication of application: **09.07.2025**
(21) Application number: 23902152.0
(22) Date of filing: 21.08.2023
(51) Int. Cl.: H04W 74/02

(54) **DATA TRANSMISSION METHOD FOR MULTIPLE ACCESS POINTS, DEVICE, AND STORAGE MEDIUM**

(30) Priority: 13.12.2022 CN 202211604643
(71) Applicant: ZTE Corporation, Shenzhen, Guangdong 518057 (CN)
(72) Inventor: LI, Yan, Shenzhen, Guangdong 518057 (CN)
(74) Representative: Aipex B.V.
(86) International application number: PCT/CN2023/114007
(87) International publication number: WO 2024/124943

(57) **Abstract**

Provided are a data transmission method for multiple access points, a device, and a storage medium. The data transmission method for multiple access points includes: in response to a shared access point completing data transmission according to a time-domain resource and/or a frequency-domain resource allocated by a sharing access point, adjusting an enhanced distributed channel access parameter of the shared access point (S110); during the active period of a timer, performing data transmission by the shared access point according to the adjusted enhanced distributed channel access parameter (S120); and in response to the timer expiring, adjusting the enhanced distributed channel access parameter of the shared access point back to an original enhanced distributed channel access parameter or a default enhanced distributed channel access parameter to allow the shared access point to perform data transmission according to the original enhanced distributed channel access parameter or the default enhanced distributed channel access parameter (S130).

## Description

### TECHNICAL FIELD

The present disclosure relates to the field of wireless communications, for example, a data transmission method for multiple access points, a device, and a storage medium.

### BACKGROUND

In scenarios with multiple wireless access points (APs), shared APs perform data transmission communication based on a time-domain resource and/or a frequency-domain resource shared by a sharing AP, which can improve the overall throughput of a multi-AP system, reduce a delay, and reduce a probability of conflict.

However, after the shared APs occupy the time-domain resource and/or the frequency-domain resource of the sharing AP and complete data transmission, the access capabilities of the shared APs are additionally increased, which is unfair for other APs or stations (STAs) in the multi-AP system.

### SUMMARY

Embodiments of the present disclosure provide a data transmission method for multiple access points, a device, and a storage medium to restrict autonomous access capabilities of shared APs for a certain period of time by adjusting channel access parameters of the shared APs after the shared APs occupy a time-domain resource and/or a frequency-domain resource of a sharing AP and complete data transmission, thereby improving data access fairness in the multi-AP system.

An embodiment of the present disclosure discloses a data transmission method for multiple access points. The method includes the following.

In response to a shared access point completing data transmission according to a time-domain resource and/or a frequency-domain resource allocated by a sharing access point, an enhanced distributed channel access parameter of the shared access point is adjusted, where the enhanced distributed channel access parameter includes an arbitration interframe space number, a min-exponent of contention window, a max-exponent of contention window and a timer parameter; during the active period of a timer, the shared access point performs data transmission according to the adjusted enhanced distributed channel access parameter; and in response to the timer expiring, the enhanced distributed channel access parameter of the shared access point is adjusted back to an original enhanced distributed channel access parameter or a default enhanced distributed channel access parameter to allow the shared access point to perform data transmission according to the original enhanced distributed channel access parameter or the default enhanced distributed channel access parameter.

An embodiment of the present disclosure discloses a computer device. The computer device includes a memory, a processor and a computer program stored in the memory and executable on the processor, where the processor implements the data transmission method for multiple access points described in the embodiments of the present disclosure when executing the program.

An embodiment of the present disclosure discloses a computer-readable storage medium for storing a computer program, where when the program is executed by a processor, the data transmission method described in the embodiments of the present disclosure is implemented.

The embodiments of the present disclosure disclose a data transmission method for multiple access points, a device, and a storage medium. In response to a shared access point completing data transmission according to a time-domain resource and/or a frequency-domain resource allocated by a sharing access point, an enhanced distributed channel access parameter of the shared access point is adjusted; during the active period of a timer, the shared access point performs data transmission according to the adjusted enhanced distributed channel access parameter; and in response to the timer expiring, the enhanced distributed channel access parameter of the shared access point is adjusted back to an original enhanced distributed channel access parameter or a default enhanced distributed channel access parameter to allow the shared access point to perform data transmission according to the original enhanced distributed channel access parameter or the default enhanced distributed channel access parameter. The data transmission method for multiple access points provided by the embodiments of the present disclosure restricts autonomous access capabilities of shared APs for a certain period of time by adjusting channel access parameters of the shared APs after the shared APs occupy a time-domain resource and/or a frequency-domain resource of a sharing AP and complete data transmission, thereby improving data access fairness in the multi-AP system.

### BRIEF DESCRIPTION OF DRAWINGS

FIG. 1 is a flowchart of a data transmission method for multiple access points according to an embodiment of the present disclosure;
FIG. 2 shows an example of a frame structure of an MA EDCA parameter set element according to an embodiment of the present disclosure;
FIG. 3 shows an example of a frame structure of another MA EDCA parameter set element according to an embodiment of the present disclosure;
FIG. 4 is a structure diagram of a data transmission apparatus for multiple access points according to an embodiment of the present disclosure; and
FIG. 5 is a structure diagram of a computer device according to an embodiment of the present disclosure.

### DETAILED DESCRIPTION

Embodiments of the present disclosure are described hereinafter in conjunction with drawings.

The embodiments described herein are intended to explain the present disclosure.

Suffixes such as "module", "part", or "unit" used to indicate elements in the subsequent description are merely used to facilitate the description of the present disclosure and have no particular meaning in themselves. Therefore, "module", "part", or "unit" may be used in a mixed manner.

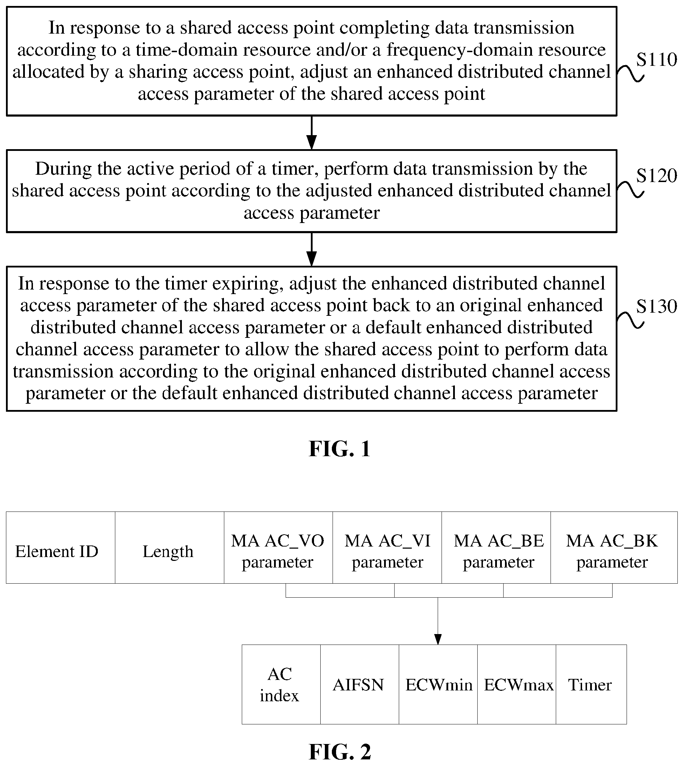

In an embodiment, FIG. 1 is a flowchart of a data transmission method for multiple access points according to an embodiment of the present disclosure. The method may be applied to a case of adjusting an enhanced distributed channel access parameter of a shared access point. The method may be executed by a data transmission apparatus for multiple access points. The apparatus may be a communication device. As shown in FIG. 1, the method includes steps S110, S120 and S130.

In S110, in response to a shared access point completing data transmission according to a time-domain resource and/or a frequency-domain resource allocated by a sharing access point, an enhanced distributed channel access parameter of the shared access point is adjusted.

The enhanced distributed channel access parameter includes an arbitration interframe space number (AIFSN), a min-exponent of contention window (ECWmin), a max-exponent of contention window (ECWmax) and a timer parameter (Timer).

In the uplink orthogonal frequency-division multiple access (UL-OFDMA) mechanism, a sharing access point (sharing AP) contends for and acquires a transmission opportunity (TXOP) and then notifies a controller. The controller performs resource allocation according to collected link quality information. The controller divides the TXOP acquired by the sharing AP into one or more time windows (that is, time-domain resources) and allocates the one or more time windows to other shared APs or the controller allocates frequency-domain resources of the TXOP acquired by the sharing AP to other shared APs. A shared AP transmits data of a specific access category according to a time-domain resource and/or a frequency-domain resource allocated by the sharing AP, and when the data of the specific access category is successfully transmitted, adjusts the enhanced distributed channel access (EDCA) parameter corresponding to the access category of the shared AP.

In an embodiment, the enhanced distributed channel access parameter of the shared access point may be adjusted in the following manner: an enhanced distributed channel access parameter corresponding to an access category of the shared access point is adjusted.

The access category (AC) is a category of data transmitted by the shared access point according to the time-domain resource and/or the frequency-domain resource allocated by the sharing access point. In the field of communications, the access category includes four grades which are classified according to priorities: AC_VO (Voice) > AC_VI (Video) > AC_BE (Best-effort) > AC_BK (Background). AC_VO may be understood as a voice category, AC_VI may be understood as a video category, AC_BE may be understood as a web data category, and AC_BK may be understood as a file category. In this embodiment, when the shared access point completes transmission of data of one access category according to the time-domain resource and/or the frequency-domain resource allocated by the sharing access point, an EDCA parameter corresponding to the access category of the shared access point is adjusted. That is, the EDCA parameter includes AIFSN[AC], ECWmin[AC], ECWmax[AC] and Timer[AC]. For example, assuming that the shared access point completes transmission of data of the AC_VO category and data of the AC_BE category according to the time-domain resource and/or the frequency-domain resource allocated by the sharing access point, an EDCA parameter corresponding to the AC_VO category and an EDCA parameter corresponding to the AC_BE category of the shared access point are adjusted.

In an embodiment, the enhanced distributed channel access parameter corresponding to the access category of the shared access point may be adjusted in the following manner: a first enhanced distributed channel access parameter is acquired from the sharing access point, and the enhanced distributed channel access parameter corresponding to the access category of the shared access point is adjusted to the first enhanced distributed channel access parameter.

The first enhanced distributed channel access parameter is a multi-user enhanced distributed channel access (MU EDCA) parameter recorded in a set information frame, and the set information frame is a beacon frame or a probe response frame.

After the shared AP successfully transmits data of a specific AC according to the time-domain resource and/or the frequency-domain resource allocated by the sharing AP, an EDCA parameter corresponding to the specific AC of the shared AP is replaced with an MU EDCA parameter carried in an information frame of the sharing AP.

In an embodiment, the enhanced distributed channel access parameter corresponding to the access category of the shared access point may be adjusted in the following manner: a second enhanced distributed channel access parameter is acquired from the sharing access point, and the enhanced distributed channel access parameter corresponding to the access category of the shared access point is adjusted to the second enhanced distributed channel access parameter.

The second enhanced distributed channel access parameter is a multi-AP enhanced distributed channel access (MA EDCA) parameter recorded in a set information frame, and the set information frame is a beacon frame or a probe response frame.

In this embodiment, an MA EDCA parameter set element carried by the sharing AP in the beacon frame and the probe response frame includes an MA EDCA parameter. For example, FIG. 2 shows an example of a frame structure of the MA EDCA parameter set element of this embodiment. As shown in FIG. 2, the frame structure includes an element identity (ID), an element length and MA EDCA parameters of four access categories (MA AC_VO, MA AC_VI, MA AC_BE and MA AC_BK, respectively), and EDCA parameters of each access category include AIFSN, ECWmin, ECWmax and Timer.

After the shared AP successfully transmits data of a specific AC according to the time-domain resource and/or the frequency-domain resource allocated by the sharing AP, an EDCA parameter corresponding to the specific AC of the shared AP is replaced with an MA EDCA parameter in a parameter set element carried in an information frame of the sharing AP.

In an embodiment, the enhanced distributed channel access parameter corresponding to the access category of the shared access point may be adjusted in the following manner: a third enhanced distributed channel access parameter is acquired from the sharing access point according to identification information of the shared access point, and the enhanced distributed channel access parameter corresponding to the access category of the shared access point is adjusted to the third enhanced distributed channel access parameter.

The third enhanced distributed channel access parameter is an MA EDCA parameter recorded in a set information frame, and the correspondence between identification information of each shared access point and the third enhanced distributed channel access parameter is recorded in the set information frame.

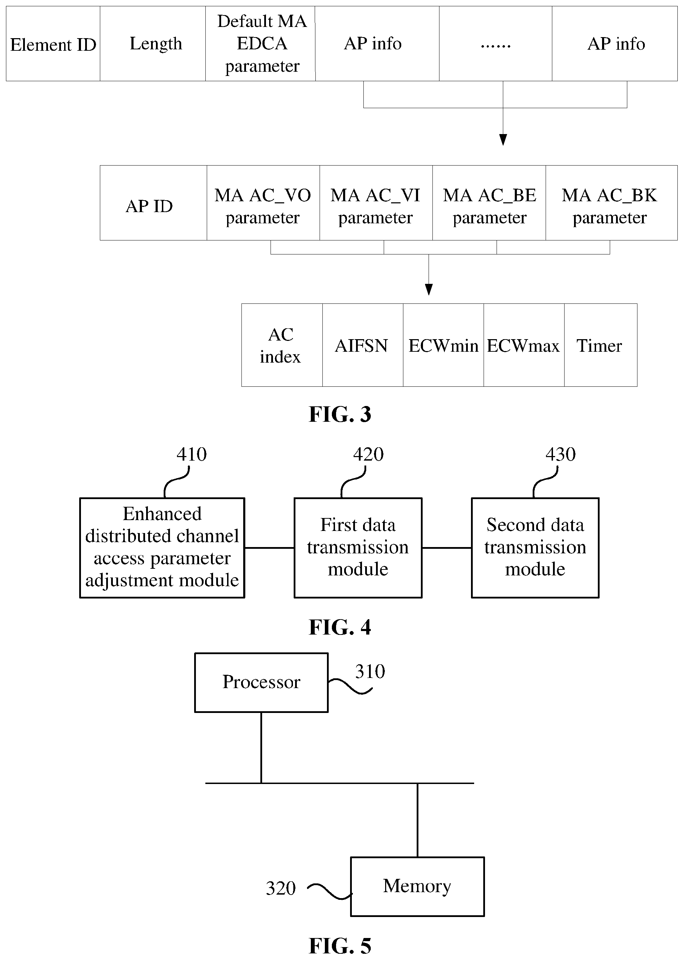

In this embodiment, an MA EDCA parameter set element carried by the sharing AP in the beacon frame and the probe response frame includes pieces of AP information (AP info), and each AP info carries an MA EDCA parameter of a corresponding AP. For example, FIG. 3 shows an example of a frame structure of the MA EDCA parameter set element of this embodiment. As shown in FIG. 3, the frame structure includes an element identity (ID), an element length, a default MA EDCA parameter and pieces of AP information. Each piece of AP information carries MA EDCA parameters of four access categories (MA AC_VO, MA AC_VI, MA AC_BE and MA AC_BK, respectively), and EDCA parameters of each access category include AIFSN, ECWmin, ECWmax and Timer.

After the shared AP successfully transmits data of a specific AC according to the time-domain resource and/or the frequency-domain resource allocated by the sharing AP, identification information of the shared AP is acquired, and an EDCA parameter corresponding to the specific AC of the shared AP is replaced with a MA EDCA parameter carried by AP info corresponding the identification information in a parameter set element of the sharing AP.

In an embodiment, the enhanced distributed channel access parameter corresponding to the access category of the shared access point may be adjusted to the third enhanced distributed channel access parameter in the following manner: the sharing access point sends a third enhanced distributed channel access parameter corresponding to the shared access point to the shared access point via unicast.

After the shared AP successfully transmits data of a specific AC according to the time-domain resource and/or the frequency-domain resource allocated by the sharing AP, identification information of the shared AP is acquired, the sharing AP extracts a third EDCA parameter corresponding to the shared AP from an information frame according to the identification information and sends the third EDCA parameter to the shared AP via unicast to replace an original EDCA parameter in the shared AP with the third EDCA parameter.

In an embodiment, the third enhanced distributed channel access parameter may be acquired from the sharing access point according to the identification information in the following manner: the third enhanced distributed channel access parameter is acquired from a broadcast information frame sent by the sharing access point according to the identification information of the shared access point.

After the shared AP successfully transmits data of a specific AC according to the time-domain resource and/or the frequency-domain resource allocated by the sharing AP, the sharing AP broadcasts an information frame into the shared AP, the shared AP acquires a third EDCA parameter from the broadcast information frame sent by the sharing access point according to identification information of the shared AP, and an original EDCA parameter in the shared AP is replaced with the third EDCA parameter.

In S120, during the active period of a timer, the shared access point performs data transmission according to the adjusted enhanced distributed channel access parameter.

The active period of the timer may be understood as the adjusted timer being in the process of timing. In this embodiment, for the manner in which an AP performs data transmission according to an EDCA parameter, reference may be made to communication protocols, and the details are not repeated here.

If the EDCA parameter of the shared AP is adjusted to the first EDCA parameter, the shared AP accesses a medium according to the first EDCA parameter. If the EDCA parameter of the shared AP is adjusted to the second EDCA parameter, the shared AP accesses a medium according to the second EDCA parameter. If the EDCA parameter of the shared AP is adjusted to the third EDCA parameter, the shared AP accesses a medium according to the third EDCA parameter.

In S130, in response to the timer expiring, the enhanced distributed channel access parameter of the shared access point is adjusted back to an original enhanced distributed channel access parameter or a default enhanced distributed channel access parameter to allow the shared access point to perform data transmission according to the original enhanced distributed channel access parameter or the default enhanced distributed channel access parameter.

The timer expiring may be understood as the timer being reset or the counting of the timer reaching 0. The original EDCA parameter may be understood as an unadjusted EDCA parameter of the shared AP, and the default EDCA parameter may be understood as a default EDCA parameter pre-configured in a communication protocol.

In an embodiment, the enhanced distributed channel access parameter corresponding to the access category of the shared access point may be adjusted in the following manner: if the third enhanced distributed channel access parameter fails to be acquired from the sharing access point according to the identification information of the shared access point, the default enhanced distributed channel access parameter is extracted from an information frame of the sharing access point, and the enhanced distributed channel access parameter corresponding to the access category of the shared access point is adjusted to the default enhanced distributed channel access parameter.

The default EDCA parameters may be a default MA EDCA parameter shown in FIG. 3. In this embodiment, if the shared AP does not find a MA EDCA parameter corresponding to identification information of the shared AP from the information frame of the sharing AP, an EDCA parameter corresponding to an access category of the shared AP is adjusted to the default EDCA parameter in the information frame.

In the solutions of the embodiments of the present disclosure, in response to a shared access point completing data transmission according to a time-domain resource and/or a frequency-domain resource allocated by a sharing access point, an enhanced distributed channel access parameter of the shared access point is adjusted; during the active period of a timer, the shared access point performs data transmission according to the adjusted enhanced distributed channel access parameter; and in response to the timer expiring, the enhanced distributed channel access parameter of the shared access point is adjusted back to an original enhanced distributed channel access parameter or a default enhanced distributed channel access parameter to allow the shared access point to perform data transmission according to the original enhanced distributed channel access parameter or the default enhanced distributed channel access parameter. The data transmission method for multiple access points provided by the embodiments of the present disclosure restricts autonomous access capabilities of shared APs for a certain period of time by adjusting channel access parameters of the shared APs after the shared APs occupy a time-domain resource and/or a frequency-domain resource of a sharing AP and complete data transmission, thereby improving data access fairness in the multi-AP system.

FIG. 4 is a structure diagram of a data transmission apparatus for multiple access points according to an embodiment of the present disclosure. As shown in FIG. 4, the apparatus includes an enhanced distributed channel access parameter adjustment module 410, a first data transmission module 420 and a second data transmission module 430.

The enhanced distributed channel access parameter adjustment module 410 is configured to, in response to a shared access point completing data transmission according to a time-domain resource and/or a frequency-domain resource allocated by a sharing access point, adjust an enhanced distributed channel access parameter of the shared access point. The enhanced distributed channel access parameter includes an arbitration interframe space number, a min-exponent of contention window, a max-exponent of contention window and a timer parameter. The first data transmission module 420 is configured to: during the active period of a timer, perform data transmission by the shared access point according to the adjusted enhanced distributed channel access parameter. The second data transmission module 430 is configured to, in response to the timer expiring, adjust the enhanced distributed channel access parameter of the shared access point back to an original enhanced distributed channel access parameter or a default enhanced distributed channel access parameter to allow the shared access point to perform data transmission according to the original enhanced distributed channel access parameter or the default enhanced distributed channel access parameter.

In an embodiment, the enhanced distributed channel access parameter adjustment module 410 is further configured to: adjust an enhanced distributed channel access parameter corresponding to an access category of the shared access point. The access category is a category of data transmitted by the shared access point according to the time-domain resource and/or the frequency-domain resource allocated by the sharing access point.

In an embodiment, the enhanced distributed channel access parameter adjustment module 410 is further configured to: acquire a first enhanced distributed channel access parameter from the sharing access point, where the first enhanced distributed channel access parameter is a multi-user enhanced distributed channel access parameter recorded in a set information frame, and the set information frame is a beacon frame or a probe response frame; and adjust the enhanced distributed channel access parameter corresponding to the access category of the shared access point to the first enhanced distributed channel access parameter.

In an embodiment, the enhanced distributed channel access parameter adjustment module 410 is further configured to: acquire a second enhanced distributed channel access parameter from the sharing access point, where the second enhanced distributed channel access parameter is a multi-access point enhanced distributed channel access parameter recorded in a set information frame, and the set information frame is a beacon frame or a probe response frame; and adjust the enhanced distributed channel access parameter corresponding to the access category of the shared access point to the second enhanced distributed channel access parameter.

In an embodiment, the enhanced distributed channel access parameter adjustment module 410 is further configured to: acquire a third enhanced distributed channel access parameter from the sharing access point according to identification information of the shared access point, where the third enhanced distributed channel access parameter is a multi-access point enhanced distributed channel access parameter recorded in a set information frame, and a correspondence between identification information of each shared access point and the third enhanced distributed channel access parameter is recorded in the set information frame; and adjust the enhanced distributed channel access parameter corresponding to the access category of the shared access point to the third enhanced distributed channel access parameter.

In an embodiment, the enhanced distributed channel access parameter adjustment module 410 is further configured to: enable the sharing access point to send a third enhanced distributed channel access parameter corresponding to the shared access point to the shared access point via unicast.

In an embodiment, the enhanced distributed channel access parameter adjustment module 410 is further configured to: acquire the third enhanced distributed channel access parameter from a broadcast information frame sent by the sharing access point according to the identification information of the shared access point.

In an embodiment, the enhanced distributed channel access parameter adjustment module 410 is further configured to: in response to the third enhanced distributed channel access parameter failing to be acquired from the sharing access point according to the identification information of the shared access point, extract the default enhanced distributed channel access parameter from an information frame of the sharing access point; and adjust the enhanced distributed channel access parameter corresponding to the access category of the shared access point to the default enhanced distributed channel access parameter.

In an embodiment, FIG. 5 is a structure diagram of a computer device according to an embodiment of the present disclosure. As shown in FIG. 5, the device provided by the present disclosure includes a processor 310 and a memory 320. One or more processors 310 may be provided in the device. One processor 310 is shown as an example in FIG. 5. One or more memories 320 may be provided in the device. One memory 320 is shown as an example in FIG. 5. The processor 310 and the memory 320 in the device are connected via a bus or in other manners. The connection via a bus is shown as an example in FIG. 5. In an embodiment, the device is a computer device.

As a computer-readable storage medium, the memory 320 may be configured to store software programs, computer-executable programs, and modules such as program instructions/modules corresponding to the device of any embodiment of the present disclosure (for example, the enhanced distributed channel access parameter adjustment module 410 and the first data transmission module 420 in the data transmission apparatus for multiple access points). The memory 320 may include a program storage region and a data storage region, where the program storage region may store an operating system and an application program required by at least one function, and the data storage region may store data created depending on the use of the device. Additionally, the memory 320 may include a high-speed random-access memory and may also include a nonvolatile memory such as at least one magnetic disk memory, a flash memory, or another nonvolatile solid-state memory. In some examples, the memory 320 may include memories remote from the processor 310, and these remote memories may be connected to the device through a network. Examples of the preceding network include, but are not limited to, the Internet, an intranet, a local area network, a mobile communication network, and a combination thereof.

The preceding device may be configured to perform the data transmission method for multiple access points provided by any preceding embodiment and has corresponding functions and effects.

The programs stored in the corresponding memory 320 may be corresponding program instructions/modules applied to the data transmission method for multiple access points in the embodiments of the present disclosure, and the processor 310 executes software programs, instructions, and modules stored in the memory 320 to perform one or more function applications and data processing of the computer device, that is, to implement the data transmission method for multiple access points in the preceding method embodiments. When the preceding device is an access point, the device may perform the data transmission method for multiple access points provided by any embodiment of the present disclosure and has corresponding functions and effects.

The embodiments of the present disclosure further provide a storage medium including computer-executable instructions. The computer-executable instructions, when executed by a computer processor, are used for performing a data transmission method for multiple access points. The method includes: in response to a shared access point completing data transmission according to a time-domain resource and/or a frequency-domain resource allocated by a sharing access point, an enhanced distributed channel access parameter of the shared access point is adjusted, where the enhanced distributed channel access parameter includes an arbitration interframe space number, a min-exponent of contention window, a max-exponent of contention window and a timer parameter; during the active period of a timer, the shared access point performs data transmission according to the adjusted enhanced distributed channel access parameter; and in response to the timer expiring, the enhanced distributed channel access parameter of the shared access point is adjusted back to an original enhanced distributed channel access parameter or a default enhanced distributed channel access parameter to allow the shared access point to perform data transmission according to the original enhanced distributed channel access parameter or the default enhanced distributed channel access parameter.

It is to be understood by those skilled in the art that the term "user equipment" encompasses any suitable type of wireless user equipment, for example, a mobile phone, a portable data processing apparatus, a portable web browser, or a vehicle-mounted mobile station.

Generally speaking, embodiments of the present disclosure may be implemented in hardware or special-purpose circuits, software, logic, or any combination thereof. For example, some aspects may be implemented in hardware while other aspects may be implemented in firmware or software executable by a controller, a microprocessor, or another computing apparatus, though the present disclosure is not limited thereto.

Embodiments of the present disclosure may be implemented through the execution of computer program instructions by a data processor of a mobile apparatus, for example, implemented in a processor entity, by hardware, or by a combination of software and hardware. The computer program instructions may be assembly instructions, instruction set architecture (ISA) instructions, machine instructions, machine-related instructions, microcodes, firmware instructions, status setting data, or source or object codes written in any combination of one or more programming languages.

A block diagram of any logic flow among the drawings of the present disclosure may represent program operations, may represent interconnected logic circuits, modules, and functions, or may represent a combination of program operations and logic circuits, modules, and functions. Computer programs may be stored in a memory. The memory may be of any type suitable for a local technical environment and may be implemented using any suitable data storage technology, such as, but not limited to, a read-only memory (ROM), a random-access memory (RAM), or an optical memory device and system (for example, a digital video disc (DVD) or a compact disc (CD)). Computer-readable media may include non-transitory storage media. The data processor may be of any type suitable for the local technical environment, such as, but not limited to, a general-purpose computer, a special-purpose computer, a microprocessor, a digital signal processor (DSP), an application-specific integrated circuit (ASIC), a field-programmable gate array (FPGA), and a processor based on a multi-core processor architecture.

The preceding illustrates example embodiments of the present disclosure.

## Claims

1. A data transmission method for multiple access points, comprising:
in response to a shared access point completing data transmission according to at least one of a time-domain resource or a frequency-domain resource allocated by a sharing access point, adjusting an enhanced distributed channel access parameter of the shared access point, wherein the enhanced distributed channel access parameter comprises an arbitration interframe space number, a min-exponent of contention window, a max-exponent of contention window and a timer parameter;
during an active period of a timer, performing data transmission by the shared access point according to the adjusted enhanced distributed channel access parameter; and
in response to the timer expiring, adjusting the enhanced distributed channel access parameter of the shared access point back to an original enhanced distributed channel access parameter or a default enhanced distributed channel access parameter to allow the shared access point to perform data transmission according to the original enhanced distributed channel access parameter or the default enhanced distributed channel access parameter.

2. The method of claim 1, wherein adjusting the enhanced distributed channel access parameter of the shared access point comprises:
adjusting an enhanced distributed channel access parameter corresponding to an access category of the shared access point, wherein the access category is a category of data transmitted by the shared access point according to at least one of the time-domain resource or the frequency-domain resource allocated by the sharing access point.

3. The method of claim 2, wherein adjusting the enhanced distributed channel access parameter corresponding to the access category of the shared access point comprises:
acquiring a first enhanced distributed channel access parameter from the sharing access point, wherein the first enhanced distributed channel access parameter is a multi-user enhanced distributed channel access parameter recorded in a set information frame, and the set information frame is a beacon frame or a probe response frame; and
adjusting the enhanced distributed channel access parameter corresponding to the access category of the shared access point to the first enhanced distributed channel access parameter.

4. The method of claim 2, wherein adjusting the enhanced distributed channel access parameter corresponding to the access category of the shared access point comprises:
acquiring a second enhanced distributed channel access parameter from the sharing access point, wherein the second enhanced distributed channel access parameter is a multi-access point enhanced distributed channel access parameter recorded in a set information frame, and the set information frame is a beacon frame or a probe response frame; and
adjusting the enhanced distributed channel access parameter corresponding to the access category of the shared access point to the second enhanced distributed channel access parameter.

5. The method of claim 2, wherein adjusting the enhanced distributed channel access parameter corresponding to the access category of the shared access point comprises:
acquiring a third enhanced distributed channel access parameter from the sharing access point according to identification information of the shared access point, wherein the third enhanced distributed channel access parameter is a multi-access point enhanced distributed channel access parameter recorded in a set information frame, and a correspondence between identification information of each shared access point and the third enhanced distributed channel access parameter is recorded in the set information frame; and
adjusting the enhanced distributed channel access parameter corresponding to the access category of the shared access point to the third enhanced distributed channel access parameter.

6. The method of claim 5, wherein adjusting the enhanced distributed channel access parameter corresponding to the access category of the shared access point to the third enhanced distributed channel access parameter comprises:
receiving, by the shared access point, the third enhanced distributed channel access parameter corresponding to the shared access point sent by the sharing access point via unicast.

7. The method of claim 5, wherein acquiring the third enhanced distributed channel access parameter from the sharing access point according to the identification information of the shared access point comprises:
acquiring the third enhanced distributed channel access parameter from a broadcast information frame sent by the sharing access point according to the identification information of the shared access point.

8. The method of claim 5, wherein adjusting the enhanced distributed channel access parameter corresponding to the access category of the shared access point comprises:
in response to the third enhanced distributed channel access parameter failing to be acquired from the sharing access point according to the identification information of the shared access point, extracting the default enhanced distributed channel access parameter from an information frame of the sharing access point; and
adjusting the enhanced distributed channel access parameter corresponding to the access category of the shared access point to the default enhanced distributed channel access parameter.

9. A computer device, comprising a memory, a processor and a computer program stored in the memory and executable on the processor, wherein the processor implements the data transmission method for multiple access points of any one of claims 1 to 8 when executing the program.

10. A computer-readable storage medium for storing a computer program, wherein when the program is executed by a processor, the data transmission method for multiple access points of any one of claims 1 to 8 is implemented.
